# EUROPEAN PATENT APPLICATION

(11) **EP 2 088 395 A1**
(43) Date of publication of application: **12.08.2009**
(21) Application number: 08151233.7
(22) Date of filing: 08.02.2008
(51) Int. Cl.: G01B 17/02

(54) **Measurement of the thickness of a liquid layer.**

(71) Applicant: Nederlandse Organisatie voor toegepast-natuurwetenschappelijk onderzoek TNO, 2628 VK Delft (NL)
(72) Inventor: The designation of the inventor has not yet been filed
(74) Representative: Hatzmann, Martin

(57) **Abstract**

Method for measuring the thickness of a liquid, e.g. water, layer (1) residing or flowing upon a solid carrier (2) and having a first boundary plane (3), between the liquid and the carrier, as well as a second boundary plane (4), between the liquid and an ambient gas, e.g. air. The method comprises transmitting an ultrasonic signal towards the liquid layer, detecting signals reflected by the first boundary plane and the second boundary plane, and computing the thickness of the liquid layer from the travel times of the signals reflected via the first boundary plane and via the second boundary plane respectively.

## Description

The invention concerns a method for measuring the thickness of a liquid, e.g. water, layer residing or flowing upon a solid carrier.

In e.g. chips manufacturing processes it is very important to monitor and to control the thickness of a liquid (often water or a water based liquid) layer or film upon a solid layer, e.g. a SiO₂ based substrate.

Until now no simple and reliable method has been disclosed.

Aim of this invention is to provide such simple and reliable method, based on the use of ultrasound.

According to the invention, in the method for measuring the thickness of a liquid, e.g. water, layer residing or flowing upon a solid carrier and having a first boundary plane, between the liquid and the carrier, as well as a second boundary plane, between the liquid and an ambient gas, e.g. air, the following steps are preferred:
- transmitting an ultrasonic signal towards the liquid layer (from either the gas or the solid carrier side or both);
- detecting signals reflected by the first boundary plane and the second boundary plane;
- computing the thickness of the liquid layer from the travel times of the signals reflected via the first boundary plane and via the second boundary plane respectively (either primary or multiple reflections or both).

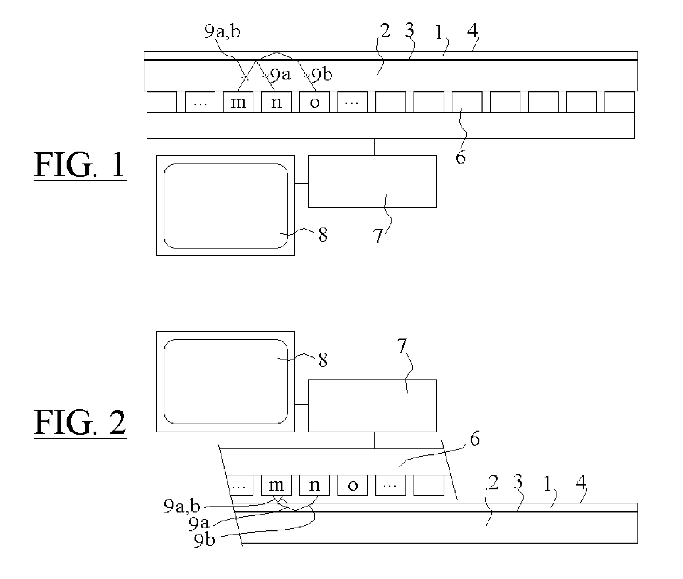

The inventive method will be elucidated now by figure 1, which illustrates an exemplary embodiment of a configuration which is arranged to perform the method according to the invention.

Figure 1 shows a liquid, e.g. water, layer 1, residing or flowing upon a solid carrier 2, having a first boundary plane 3, between the liquid 1 and the carrier 2, as well as a second boundary plane 4, between the liquid 1 and an ambient gas, e.g. air, 5. Ultrasonic signals (pulses) can be transmitted towards the liquid layer 1 by means of a line (1-D) or matrix (2-D) array of ultrasonic transducers 6 under control of a control module 7. Under control of the control module 7 those transducers 6 are also able to detect signals reflected by the first boundary plane 3 and the second boundary plane 4, e.g. by transmitting ultrasonic pulses at a first (e.g. uneven) number of time slots (emission slots), while receiving at intermediate (e.g. even) time slots (reception slots). The control module may incorporate computing means which are able to compute the thickness of the liquid layer 1 from the reflection (or delay) times of the signal (pulses) reflected via the first boundary plane 3 and via the second boundary plane 4 respectively. In the figure a first signal path 9a runs from transmitting transducer 6n, is (partially) reflected by plane 3 and is received by transducer 6m). A second signal path runs from transducer 6n, is reflected by plane 4 and received by transducer 6o. In practice many signal paths may exist, which are partly reflected by the first boundary plane 3 and partly reflected by the second boundary plane 4 and received by either the same transducer or another transducer. The control and computing module 7 is able to calculate the (unknown) thickness of the liquid layer 1 from the pattern of travel times. The thickness of layer 1 could be displayed in graphical and/or numerical form via output device 8.

Figure 2 shows another configuration for measuring the thickness of layer 1. In figure 2 the array of ultrasonic transducers is installed above the liquid layer 1 instead of - as in figure 1 - below it. The operation is similar to the operation of the configuration of figure 1.

## Claims

1. Method for measuring the thickness of a liquid, e.g. water, layer (1) residing or flowing upon a solid carrier (2) and having a first boundary plane (3), between the liquid and the carrier, as well as a second boundary plane (4), between the liquid and an ambient gas, e.g. air, the method comprising:
- transmitting an ultrasonic signal towards the liquid layer;
- detecting signals reflected by the first boundary plane and the second boundary plane;
- computing the thickness of the liquid layer from the travel times of the signals reflected via the first boundary plane and via the second boundary plane respectively.

2. System which is arranged to perform the method according to claim 1.

3. Software means which is arranged to control and/or perform at least part of the method according to claim 1.
